# EUROPÄISCHE PATENTSCHRIFT

(11) **EP 3 388 747 B1**
(45) Veröffentlichungstag und Bekanntmachung des Hinweises auf die Patenterteilung: **25.03.2020**
(21) Anmeldenummer: 18165636.4
(22) Anmeldetag: 04.04.2018
(51) Int. Cl.: F24C 15/00, F25D 27/00, H05B 6/64, F21W 131/305, F21W 131/307, F21Y 115/10, G02B 6/10, G02B 19/00

(54) **GARGERÄT MIT EINEM GARRAUM**
COOKING OVEN
FOUR DE CUISSON

(30) Priorität: 10.04.2017 DE 102017107670
(43) Veröffentlichungstag der Anmeldung: 17.10.2018
(73) Patentinhaber: Miele & Cie. KG, 33332 Gütersloh (DE)
(72) Erfinder: Schnee, Alexander, 32257 Bünde (DE); Busse, Christian, 32289 Rödinghausen (DE)

(56) Entgegenhaltungen:
- EP-A1- 2 119 968
- EP-A2- 2 647 917
- DE-A1-102007 024 014
- DE-U1-202015 104 659

## Beschreibung

Die Erfindung betrifft ein Gargerät mit einer Lichtleitvorrichtung zum Leiten von Licht in den Garraum des Gargeräts, welches beispielsweise ein Mikrowellengerät ist.

Ein Garraum eines Gargeräts, beispielsweise eines Dampfgarers, ist üblicherweise beleuchtet, um einer Bedienperson einen Einblick in den Garraum zu ermöglichen. Ein gattungsgemäßes Gargerät ist aus der Druckschrift EP 2 647 917 A2 bekannt.

Auch die Druckschriften EP 2 119 968 A1 und DE 20 2015 104 659 U1 zeigen jeweils eine Leuchte für ein Haushaltsgerät, beispielsweise Ofen, bei dem die Lichtquelle außerhalb des Ofenraumes angeordnet ist und das Licht über ein an der Wand des Ofenraumes angeordnetes Lichtauskoppelelement in den Ofenraum geleitet wird. Dabei ist zwischen dem Lichtauskoppelelement und der Luchtquelle ein Lichtleiter vorgesehen.

Eine Beleuchtungseinrichtung mit einem Lichtleiter als Sitzbeleuchtung für Flugzeuge oder Kraftfahrzeuge beziehungsweise zur Verwendung als Mikroskopbeleuchtung ist aus der Druckschrift DE 10 2007 024 014 A1 bekannt.

Der Erfindung stellt sich die Aufgabe ein Gargerät mit einer verbesserten Lichtleitvorrichtung zum Leiten von Licht in den Garraum des Gargeräts zu schaffen.

Erfindungsgemäß wird diese Aufgabe durch ein Gargerät mit den Merkmalen des Anspruch 1 gelöst. Vorteilhafte Ausgestaltungen und Weiterbildungen der Erfindung ergeben sich aus den nachfolgenden abhängigen Ansprüchen.

Die mit der Erfindung erreichbaren Vorteile bestehen neben einer Einsparung von Bauraum in einer Erhöhung der Zugänglichkeit und einer Montageerleichterung.

Ein Gargerät umfasst einen Garraum, mit einer den Garraum begrenzenden Wand, und eine Lichtleitvorrichtung zum Leiten von Licht in den Garraum des Gargeräts. Die Lichtleitvorrichtung weist die folgenden Merkmale auf:
ein Lichtauskoppelelement mit einer Anliegeseite zum fluiddichten Anliegen an einer Innenseite einer Wand des Garraums und einer der Anliegeseite gegenüberliegenden Außenseite, wobei die Anliegeseite eine Grundfläche umfasst und die Außenseite eine gewölbte Auskoppelfläche zum gerichteten Auskoppeln von Licht aus dem Lichtauskoppelelement aufweist; und
ein sich von der Grundfläche aus erstreckendes stabförmiges Lichteinkoppelelement mit einer außerhalb des Garraums anordenbaren Einkoppelfläche zum Einkoppeln von Licht.

Das stabförmige Lichteinkoppelelement ist erfindungsgemäß in einem Winkel zu dem Lichtauskoppelelement und/oder der Wand des Garraums und/oder zu der Grundfläche orientiert. Dieser Winkel des stabförmigen Lichteinkoppelelementes weicht von der Lotrechten zum Lichtauskoppelelement und/oder zur Wand des Garraums und/oder der Grundfläche ab. Der Winkel des stabförmigen Lichteinkoppelelementes ist in einem Bereich zwischen 10 Grad und 80 Grad, vorzugsweise in einem Bereich von 25 Grad bis 75 Grad zu dem Lichtauskoppelelement und/oder zu der Wand des Garraums.

Als besonders vorteilhaft hat es sich erwiesen, dass das stabförmige Lichteinkoppelelement in einem Winkel von 45 Grad zu dem Lichtauskoppelelement und/oder der Wand des Garraums und/oder der Grundfläche orientiert. Hierdurch ist einerseits eine gute Ausleuchtung des Garraums möglich, andererseits ist diese hierdurch für einen in den Garraum hineinblickenden Benutzer blendfrei ausgeführt.

Bei einer Positionierung der Lichtleitvorrichtung in einer Wand des Garraumes nah an der Garraumöffnung ist das Lichteinkoppelelement zur Garraumöffnung hin geneigt. Gerade durch diese Neigung kann die blendfreie Ausgestaltung bei zugleich guter Ausleuchtung des Garraumes besonders effektiv erreicht werden.

Das Gargerät kann zum Erwärmen von Speisen verwendet werden, die in den Garraum gestellt werden können. Dazu kann das Gargerät eine geeignete Heizeinrichtung, beispielsweise eine Mikrowellenantenne oder einen Heizdraht aufweisen. Das aus der Auskoppelfläche ausgekoppelte Licht kann zum Ausleuchten des Garraums verwendet werden. Das Lichtauskoppelelement kann einen Lichtleiter ausformen, durch den Licht von außerhalb des Garraums in den Garraum hineingeleitet wird. Durch die gewölbte Auskoppelfläche kann die Funktionalität einer Linse erreicht werden. Eine Wölbung der Auskoppelfläche kann dabei so gewählt werden, das eine gewünschte Lichtverteilung innerhalb des Garraums erreicht wird.

Vorteilhafterweise ist es unter Verwendung der Lichtleitvorrichtung nicht erforderlich, eine oder mehrere Leuchtdioden innerhalb des Garraums anzuordnen. Im Unterschied zu einer Beleuchtung, die mittig unter der Decke des Garraumes angeordnet ist, kann die den Garraum bildenden Kavität unter Verwendung der Lichtleitvorrichtung auch dann ausgeleuchtet werden, wenn ein Behälter auf einer obersten Ebene des Garraums eingeschoben wird. Dieser schluckt dann nicht das ganze Licht.

Bei dem erfindungsgemäßen Gargerät weist die Lichtleitvorrichtung einen sich von der Grundfläche aus erstreckenden stabförmigen Rastdom mit einer Rasteinrichtung zum Verrasten des Rastdoms an der Wand des Garraums auf. Der Rastdom kann beim Montieren der Lichtleitvorrichtung durch eine Durchgangsöffnung der Wand geführt werden. Der Rastdom kann somit zum Montieren und Befestigen der Lichtleitvorrichtung an der Wand des Garraums genutzt werden.

Erfindungsgemäß ist weiterhin vorgesehen, dass das Lichteinkoppelelement und der zumindest eine Rastdom zur Grundfläche der Anliegeseite des Lichtauskoppelelements unterschiedliche Winkel aufweisen und insbesondere deren Längsachsen in unterschiedlichen räumlichen Ebenen liegen.

Dabei kann der Rastdom rechtwinklig zu der Grundfläche ausgerichtet sein. Dadurch kann der Kraftaufwand zum Durchführen des Rastdoms durch die Durchgangsöffnung reduziert werden.

Die Lichtleitvorrichtung kann einen weiteren sich von der Grundfläche aus erstreckenden stabförmigen Rastdom mit einer Rasteinrichtung zum Verrasten des Rastdoms an der Wand des Garraums aufweisen. Dabei kann das Lichteinkoppelelement zwischen dem Rastdom und dem weiteren Rastdom angeordnet sein. Dadurch kann die Lichtleitvorrichtung sicher an der Wand befestigt werden.

Das Lichtauskoppelelement und/oder das Lichteinkoppelelement können schräg zu der Grundfläche ausgerichtet sein. Dadurch kann der Bauraum gering gehalten beziehungsweise eine vorteilhafte Lichtführung erreicht werden.

Gemäß einer Ausführungsform ist das Lichteinkoppelelement relativ zu dem wenigstens einen Rastdom geneigt. Insbesondere bei mehreren Rastdomen sind deren Längsachsen parallel im Raum orientiert. In einer bevorzugten Ausführungsform liegen die Längsachsen von zwei Rastdomen in einer gemeinsamen Rastebene und das Lichteinkoppelelement ist auf einer zur Rastebene senkrechten Verschwenkebene in einem Winkel von 15 Grad bis 75 Grad, insbesondere 45 Grad, zu der Rastebene geneigt. Eine Variante dieser Ausführungsform sieht vor, dass die Längsachse des Lichteinkoppelelementes die Rastebene im Bereich der Wand des Garraumes schneidet. Als Bereich der Bereich der Wand des Garraumes ist die Mächtigkeit der Wand zugüglich 10 Millimeter auf der Garraumseite und 10 Millimeter auf der dem Garraum abgewandten Seite zu verstehen.

Das Lichtauskoppelelement kann ein optisches Element ausformen. Ein solches optisches Element kann eine Linse sein. Beispielsweise kann das Lichtauskoppelelement auf diese Weise als ein Kollimator dienen.

Die Anliegeseite des Lichtauskoppelelements kann einen die Grundfläche umschließenden und über die Grundfläche hervorstehenden Dichtungsrand aufweisen. Durch den Dichtungsrand kann verhindert werden, das Dampf aus dem Garraum austreten kann.

Die Lichtleitvorrichtung kann einstückig ausgeformt sein. Dadurch können Herstellungskosten gering gehalten werden.

Beispielsweise kann die Lichtleitvorrichtung aus Silikon ausgeformt sein. Silikon ist aufgrund seiner Hitzebeständigkeit und Elastizität sehr gut geeignet. Als besonders vorteilhaft erwiesen hat es sich, dass die Lichtleitvorrichtung einen Brechungsindex n_{D25} aufweist, welcher dem von Glas entspricht oder geringer ist. Hierdurch wird eine gute Ausleuchtung und ein hoher Wirkungsgrad der Beleuchtungsvorrichtung zur Verfügung gestellt. Der Brechungsindex ist demnach kleiner als 1,5200, insbesondere kleiner als 1,4600.

Bevorzugt ist der Brechungsindex n_{D25} der Lichtleitvorrichtung in einem Bereich von 1,3600 bis 1,4300. Dieser Bereich entspricht dem Brechungsindex des menschlichen Auges, so dass eine hohe Farbtreue mit dem Licht der Beleuchtungsvorrichtung möglich wird. Besonders bevorzugt ist der Brechungsindex n_{D25} in einem Bereich von 1,4000 bis 1,4300, insbesondere in einem Bereich von 1,4100 bis 1,4199.

Dem gegenüber geht, insbesondere bei Silikonmaterialien, ein größerer Brechungsindex mit einer geringeren Transparenz und einer größeren Streuung einher. Hierraus ergibt sich der Vorteil, dass die Beleuchtungsvorrichtung weniger zum Blenden neigt und eine reduzierte Spotbildung aufweist. Hier hat es sich als vorteilhaft erwiesen, dass der Brechungsindex n_{D25} der Lichtleitvorrichtung in einem Bereich von 1,4900 bis 1,4300, insbesondere in einem Bereich von 1,4500 bis 1,4600.

Unter Berücksichtigung des Vorstehend angeführten Zielkonfliktes nach einerseits einem möglichst geringen Brechungsindex und andererseits einem moderat hohen Brechungsindex hat es sich als brauchbaren Kompromiss erwiesen, dass der Brechungsindex n_{D25} der Lichtleitvorrichtung in einem Bereich von 1,4100 bis 1,4600 liegt.

Eine Beleuchtungsvorrichtung zum Beleuchten eines Garraums eines Gargeräts weist die folgenden Merkmale auf:
eine genannte Lichtleitvorrichtung;
eine Platine mit einem Leuchtmittel; und
einen Platinenhalter zum Halten der Platine mit dem Leuchtmittel gegenüberliegend zu der Einkoppelfläche des Lichteinkoppelelements der Lichtleitvorrichtung, wobei der Platinenhalter eine Auflagefläche zum Auflegen des Platinenhalters auf eine Außenseite der Wand des Garraums aufweist.

Unter einer Platine kann eine Leiterplatte verstanden werden, die das Leuchtmittel trägt. Die Platine kann einen elektrischen Anschluss für eine Energieversorgung des Leuchtmittels aufweisen. Bei dem Leuchtmittel kann es sich um eine Leuchtdiode handeln.

Nach einer Ausführungsform ist der Platinenhalter mit der Lichtleitvorrichtung einteilig ausgeführt, insbesondere gemeinsam mit der Lichtleitvorrichtung urgeformt.

Im Kundendienstfall ist ein Austausch der als Beleuchtung fungierenden Beleuchtungsvorrichtung sehr einfach, da der Zugang zu der Baugruppe nicht die Demontage anderer Komponenten erfordert. Zudem ist eine Ausfallrate der Beleuchtung sehr gering, da die Ausfallrate direkt mit der Nutzung der Mikrowellenfunktion zusammenzuhängen scheint, und die Beleuchtungsvorrichtung, auch Beleuchtungseinheit genannt, entfernt von dem größten Potential verbaut werden kann.

Die Beleuchtungsvorrichtung ist bevorzugt nah an der Garraumöffnung, insbesondere an der Garraumdecke hinter einer Bedienblende angeordnet. Hierdurch wird ein möglicher Austausch der Baugruppe erleichtert. Gemäß einer bevorzugten Ausführungsform ist die Platine näher an der Ebene der Garraumöffnung angeordnet als die Lichtleitvorrichtung, insbesondere deren Lichteinkoppelelement.

Eine Ausführungsform sieht vor, dass die Platine mit einer Neigung zu der Wand des Garraumes und/oder einem Lichtauskoppelelement der Lichtleitvorrichtung und/oder der Grundfläche gehalten ist. Diese Neigung ist vorzugsweise in einem Bereich zwischen 10 Grad und 80 Grad, besonders bevorzugt in einem Bereich von 25 Grad bis 75 Grad zu dem Lichtauskoppelelement und/oder zu der Wand des Garraums.

Als besonders vorteilhaft hat es sich erwiesen, dass die Platine in einem Winkel von 45 Grad zu dem Lichtauskoppelelement und/oder der Wand des Garraums und/oder der Grundfläche orientiert ist. Dies ermöglicht bei der Montage und im Kundendienstfall eine gute Handhabung.

Eine ergänzende oder alternative Ausprägung der Beleuchtungsvorrichtung sieht vor, dass die Platine in montierter Position rechtwinklig zu dem Lichteinkoppelelement der Lichtleitvorrichtung orientiert ist.

Ein Gargerät kann vorteilhaft mit einer genannten Beleuchtungsvorrichtung ausgerüstet werden. Im montierten Zustand der Beleuchtungsvorrichtung ist das Lichteinkoppelelement der Lichtleitvorrichtung durch eine Durchgangsöffnung der Wand des Garraums geführt und die Anliegeseite des Lichtauskoppelelements der Lichtleitvorrichtung liegt an der Wand an. Die genannte Wand kann eine Decke des Garraums ausformen.

Gemäß einer Ausführungsform ist zumindest eine Beleuchtungsvorrichtung an einer Tür beziehungsweise Garraumöffnung, insbesondere Beschickungsöffnung, des Garraums zugwandten Seite der Wand angeordnet.

Eine günstige Ausführungsform sieht vor, dass die zumindest eine Beleuchtungseinrichtung von der Garraumöffnung beziehungsweise von einem die Ebene der Garraumöffnung aufspannenden Garraumrand einen Abstand zwischen 30 und 120 Millimeter aufweist. Bei mehreren Beleuchtungseinrichtungen haben diese vorzugsweise den selben Abstand zur Ebene bzw. zum Garraumrand.

Vorzugsweise ist die Beleuchtungsvorrichtung in der Decke des Garraumes angeordnet. Dabei hat sich als Position am vorteilhaftesten herausgestellt eine Anordnung im Mittenbereich bezogen auf die Garraumöffnung. Bei einem Gargerät mit mehreren Beleuchtungseinrichtungen sind diese gleichmäßig und/oder symmetrisch zum Mittenbereich verteilt angeordnet.

Bei dem Gargerät kann es sich um ein Haushaltgerät oder ein gewerbliches oder professionelles Gerät handeln.

Ein Ausführungsbeispiel der Lichtleitvorrichtung bzw. Beleuchtungsvorrichtung des erfindungsgemäßen Gargeräts ist in den Zeichnungen rein schematisch dargestellt und wird nachfolgend näher beschrieben. Es zeigt
- Figur 1: eine Lichtleitvorrichtung zum Leiten von Licht in einen Garraum eines Gargeräts;
- Figur 2: einen Garraum mit Lichtleitvorrichtungen;
- Figur 3: einen Abschnitt eines Garraums mit einer Lichtleitvorrichtung;
- Figur 4: eine Beleuchtungsvorrichtung zum Beleuchten eines Garraums eines Gargeräts;
- Figur 5: eine Querschnittsdarstellung der anhand von Figur 4 beschriebenen Beleuchtungsvorrichtung;
- Figur 6: eine weitere Querschnittsdarstellung der anhand von Figur 4 beschriebenen Beleuchtungsvorrichtung;
- Figur 7: einen Garraum mit Lichtleitvorrichtungen.

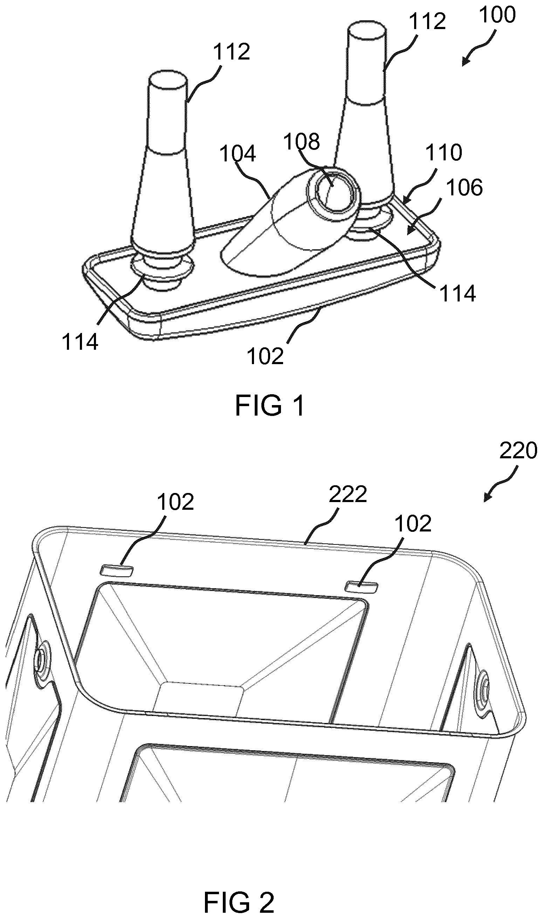

Figur 1 zeigt eine Lichtleitvorrichtung 100 zum Leiten von Licht in einen Garraum eines Gargeräts gemäß einem Ausführungsbeispiel. Die Lichtleitvorrichtung 100 weist ein Lichtauskoppelelement 102 und ein Lichteinkoppelelement 104 auf. Die Lichtleitvorrichtung 100 kann an einer Wand des Garraums befestigt werden.

Das Lichtauskoppelelement 102 weist eine Anliegeseite, in Figur 1 die oben liegende Seite, auf, mit der das Lichtauskoppelelement 102 im montierten Zustand an der Wand des Garraums anliegt. Dabei befindet sich das Lichtauskoppelelement 102 im Inneren des Garraums. Gegenüberliegend zu der Anliegeseite weist das Lichtauskoppelelement 102 eine gewölbte Auskoppelfläche auf.

Die Anliegeseite umfasst eine Grundfläche 106. Das Lichteinkoppelelement 104 erstreckt sich stabförmig aus der Grundfläche 106 heraus und ist beispielsweise zylinderförmig ausgeformt. Das Lichteinkoppelelement 104 weist eine Einkoppelfläche 108 auf, über die im Betrieb des Gargeräts Licht in das Lichteinkoppelelement 104 eingekoppelt werden kann. Das in die Einkoppelfläche 108 eingekoppelte Licht wird von dem Lichteinkoppelelement 104 zu dem Lichtauskoppelelement 102 geleitet und verlässt das Lichtauskoppelelement 102 über die Auskoppelfläche. Dabei form das Lichtauskoppelelement 104 gemäß einem Ausführungsbeispiel ein optisches Element in Form einer Linse aus.

Gemäß einem Ausführungsbeispiel ist das Lichtauskoppelelement 102 schräg zu der Grundfläche ausgerichtet. Dadurch kann die Bauhöhe der Lichtleitvorrichtung 100 gering gehalten werden.

Gemäß einem Ausführungsbeispiel ist die Grundfläche 106 von einem durchgängig umlaufenden Dichtungsrand 110 umschlossen, der über die Grundfläche 106 hervorsteht.

Optional umfasst die Lichtleitvorrichtung 100 zumindest einen Rastdom 112, gemäß dem gezeigten Ausführungsbeispiel zwei Rastdome 112, wobei das Lichteinkoppelelement 104 zwischen den zwei Rastdomen 112 angeordnet ist. Die beiden Rastdomen 112 sind rechtwinklig zur Grundfläche 106 ausgerichtet.

Die Rastdome 112 weisen einen zylinderförmigen Endabschnitt, einen daran anschließenden sich in Richtung der Grundfläche 106 verbreiternden kegelförmigen Abschnitt und eine zwischen dem kegelförmigen Abschnitt und der Grundfläche 106 angordnete Rasteinrichtung 114 auf. Die Rasteinrichtung 114 ist als eine umlaufende Krempe ausgeformt und wird bei der Montage der Lichtleitvorrichtung 100 verwendet, um die Lichtleitvorrichtung 100 an der Wand des Garraums zu befestigen. Dazu werden die Rastdome 112 durch Durchgangsöffnungen in der Wand gezogen.

Gemäß einem Ausführungsbeispiel ist die Lichtleitvorrichtung 100 einstückig aus Kunststoff, beispielsweise aus Silikon, ausgeformt.

In Figur 1 ist gemäß einem Ausführungsbeispiel eine 3D-Darstellung einer Lichtleitvorrichtung 100 in Form eines Silikonbauteils gezeigt.

Gemäß einem Ausführungsbeispiel weist das Lichtauskoppelelement 102, auch als Lichtauslasselement bezeichnet, unterschiedlich steile Flanken auf, wobei das Lichtauskoppelelement 102 im montierten Zustand mit der steilen Flanke zur Tür und mit der flachen Flanke zum Garrauminneren ausgerichtet ist.

Das Lichtauskoppelelement 102 weist gemäß einem Ausführungsbeispiel unterschiedliche Krümmungen und Winkel auf, die der Gleichrichtung der eingekoppelten Lichtwellen dienen, um eine möglichst geringe Verlustleistung zu erreichen.

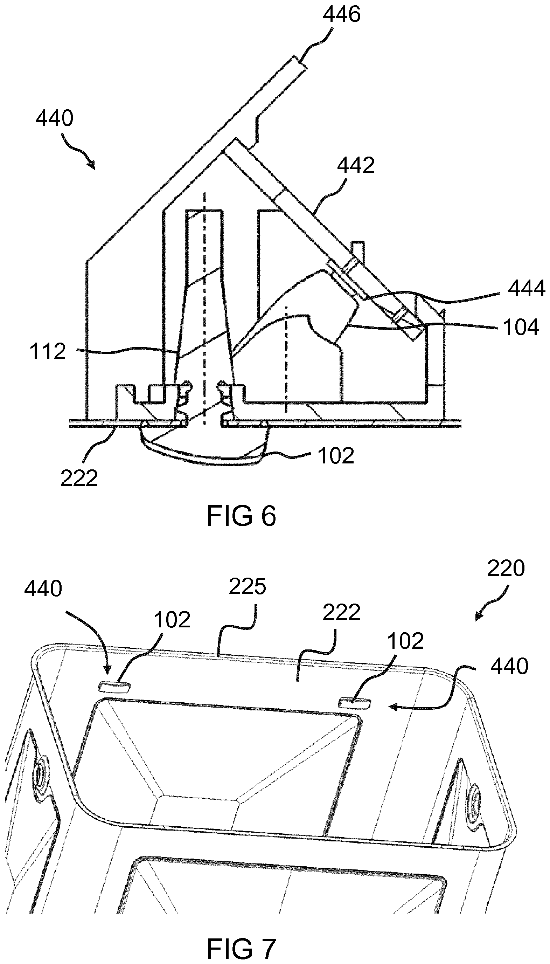

Die Figuren 2 und 7 zeigen einen Garraum 220, wobei an einer Wand 222 des Garraums 220 zwei Lichtleitvorrichtungen angeordnet sind, von denen jeweils Auskoppelflächen der Lichtauskoppelelemente 102 zu sehen sind. Bei den Lichtleitvorrichtungen kann es sich je um eine Vorrichtung handeln, wie sie anhand von Figur 1 beschrieben ist. Gezeigt ist somit eine Ansicht des Garraums 220 mit Leuchten von Innen.

Vorteilhafterweise ist es unter Verwendung der Lichtleitvorrichtungen nicht erforderlich, die Beleuchtung in allen Bereichen Wände des Garraums 220 zur realisieren. Es reicht zumindest eine an der als Decke dienenden Wand 222 angeordnete Beleuchtungsvorrichtung aus, um den Garraum vollständig auszuleuchten. Dadurch ist eine sehr geringe Anzahl von LED's für ein gute Beleuchtungsergebnis ausreichend. Zudem sind keine separate Optiken zur Optimierung der Lichtverteilung erforderlich. Die Montage kann wenig komplex realisiert werden und es ist keine Sicherung der Einheit mit Schrauben erforderlich. In dem das verwendete Leuchtmittel außerhalb des Garraums 220 angeordnet werden kann, ist eine Anfälligkeit der Beleuchtung durch Mikrowellestrahlung nicht relevant. Eine Austauschbarkeit im Kundendienstfall wird durch eine gute Zugänglichkeit erleichtert. Insbesondere ist keine komplexe Demontage des Gerätes erforderlich, um die Beleuchtungsvorrichtung auszutauschen.

Durch den hier beschriebenen Ansatz wird eine gute Ausleuchtung der Kavität des Garraums 220 unabhängig von der gewählten Einschubebene erreicht. Ferner ist eine Optimierung des Montageprozesse durch den Verzicht auf Schrauben gegeben. Es ergibt sich zum dem eine sehr hohe Lebensdauer der Leuchtmittel, beispielsweise in Form von LED's und es genügen ein oder zwei Leuchtmittel zum Ausleuchten des gesamten Garraums 220.

Somit ergibt sich ein Verringern der erforderlichen Leuchtmittel bei vergleichbarer oder besserer Ausleuchtung im Vergleich zu der Anordnung von Leuchtmitteln im Inneren des Garraums 220. Gemäß einem Ausführungsbeispiel ist die Beleuchtung in der vorderen rechten und linken Ecke der Garraumdecke angeordnet. Dabei ist die Ausrichtung der Optik, die gemäß einem Ausführungsbeispiel durch die Lichtauskoppelelemente 102 ausgeformt wird, schräg nach hinten gegen den Garraumboden und die Rückwand des Garraums 220 gerichtet.

Der Garraum 220 hat eine Garraumöffnung, welche durch einen Garraumrand 225 begrenzt ist. Die zwei Beleuchtungsvorrichtungen 440 sind bevorzugt an der Garraumdecke, insbesondere symmetrisch zur Garraumöffnung, angeordnet. Dabei entspricht der Zwischenabstand der Beleuchtungsvorrichtungen 440 zueinander dem 1,5-fachen bis 2,5-fachen des Außenabstandes der einzelnen Beleuchtungsvorrichtungen 440 zur nächstliegenden Garraum-Seitenwand. Von dem Garraumrand 225 haben die Beleuchtungsvorrichtungen 440 den gleichen Abstand, welcher im Bereich von 20 Millimeter bis 120 Millimeter liegt.

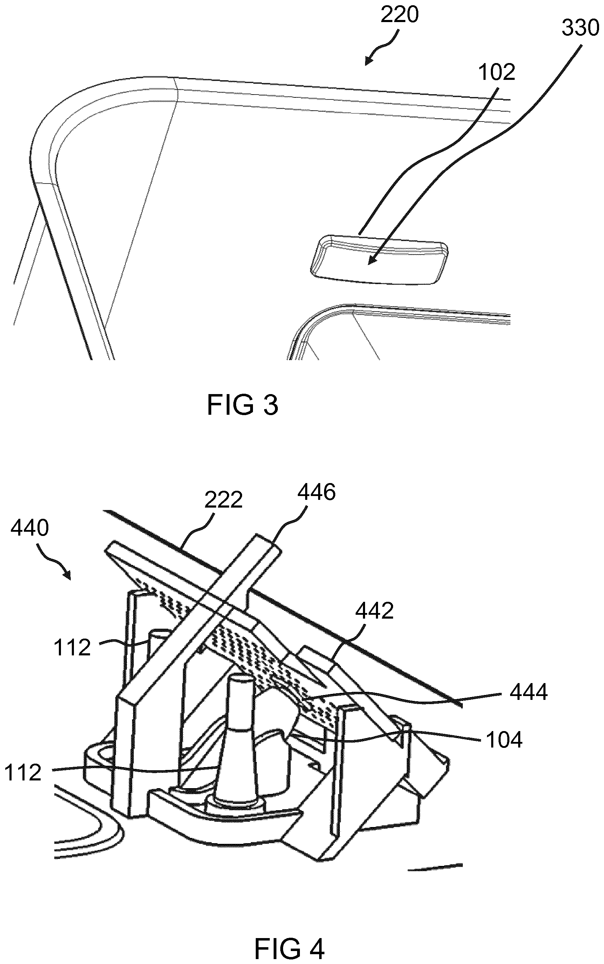

Figur 3 zeigt einen Abschnitt des anhand von Figur 3 beschriebenen Garraums 220 mit einer Lichtleitvorrichtung. Zu erkennen ist eine gewölbte Auskoppelfläche 330 des Lichtauskoppelelements 102.

Figur 4 zeigt eine Beleuchtungsvorrichtung 440 zum Beleuchten eines Garraums eines Gargeräts gemäß einem Ausführungsbeispiel. Die anhand von Figur 3 gezeigte Lichtleitvorrichtung kann Teil der anhand von Figur 4 beschriebenen Beleuchtungsvorrichtung 440 sein.

Die Beleuchtungsvorrichtung 440 umfasst eine Lichtleitvorrichtung, von der in Figur 4 die zwei Rastdome 112 und das Lichteinkoppelelement 104 zu erkennen sind, eine Platine 442 mit einem Leuchtmittel 444 zum Bereitstellen von Licht, und einen Platinenhalter 446 zum Halten der Platine 442. Der Platinenhalter 446 wird über die Rastdome 112 an der Wand 222 des Garraums gehalten und liegt über zumindest eine Auflagefläche an der Wand 222 an. Der Platinenhalter 446 ist ausgeformt, um die Platine 442 schräg gegenüber der Wand 222, hier beispielsweise rechtwinklig zu dem Lichteinkoppelelement 104, zu halten. Die Einkoppelfläche des Lichteinkoppelelements 104 liegt an dem Leuchtmittel 444 an, sodass von dem Leuchtmittel 444 ausgestrahltes Licht direkt in das Lichteinkoppelelement 104 eingekoppelt wird.

Die gemäß einem Ausführungsbeispiel aus Silikon hergestellte Lichtleitvorrichtung wird auch als Optik bezeichnet. Der Platinenhalter 446 ist beispielhaft aus Kunststoff. Die Wand 222 bildet gemäß einem Ausführungsbeispiel einen Garraummantel.

Zur Montage wird die auch als Beleuchtungseinheit bezeichnete Lichtleitvorrichtung an der Decke des Garraummantels, hier der Wand 222 montiert. Das Lichtauskoppelelement liegt an der Innenseite der die Decke ausformenden Wand 222 an. Die zwei Rastdome 112 und das Lichteinkoppelelement 104 werden durch ein definiertes Lochbild in der Wand 222 nach außen, also aus dem Garraum heraus, geführt. Der Platinenhalter 446 hält die Optik in Position, dabei werden die Rastdome 112 mit einem Übermaß durch die Garraumdecke ausformenden Wand 222 und Aufnahmelöcher im Platinenhalter 446 gezogen, hinter dem sie verrasten. Der innen liegende Teil der Optik wird dabei gegen die Wand 222, hier die Decke, des Garraumes gespannt und übernimmt zusätzlich die Dichtfunktion.

Eine Aufnahme am Platinenhalter 446 stellt die immer gleiche Position des Lichteinkoppelelementes 104 nach der Montage sicher, so dass nach dem Einrasten der Platine 442, die Ausrichtung des Leuchtmittels 448, beispielsweise einer LED zum Einkoppelelement 104 gewährleistet ist.

Die Position der Platine 442 ist unter einem Winkel zur als Garraumdecke ausgeformten Wand 222 gewählt. Dabei resultiert ein Anstellwinkel der Platine von beispielsweise 45° aus dem Winkel des Lichtleiters, hier des Lichteinkoppelelement 104 zur Wand 222. Die Abstrahlcharakteristik des Leuchtmittels 448 erfordert gemäß einem Ausführungsbeispiel für eine optimale Einkopplung die rechtwinkelige Ausrichtung des als Lichtquelle dienenden Leuchtmittels 448 zur Optik. Der Winkel resultiert aus den Rahmenbedingungen für die Lichteinkopplung, dem maximal möglichen Anstellwinkel in Abhängigkeit zum maximalen Öffnungsdurchmesser von beispielsweise d = 7 mm an der Wand 222 und dem damit möglichen maximalen Querschnitt des Lichtleiters in Form des Lichteinkoppelelements 104.

Der Halter 446 liegt gemäß einem Ausführungsbeispiel erst lose auf dem Garraum auf und wird mit der als Lichtleiter ausgeführten Lichtleitvorrichtung fixiert.

Die gemäß einem Ausführungsbeispiel als Silikonbauteil ausgeführte Lichtleitvorrichtung ist nur mechanisch (kraft- und formschlüssig) mit dem als Kunststoffteil ausgeformten Platinenhalter 446 verbunden.

Die Platine 442 mit dem Leuchtmittel 448 ist mit einem definierten Abstand zum Einkoppelbereich, also der Einkoppelfläche des Lichteinkoppelelements 104 montiert. Die Platine 442 besitzt gemäß einem Ausführungsbeispiel eine wärmeableitende Schicht, so dass die Platine 442 im Ganzen als Kühlkörper funktioniert

Bei der Montage werden die im Folgenden ausgeführten Montageschritte ausgeführt. Zunächst erfolgt ein Einsetzen der Lichtleitvorrichtung von innen in den Garraum. Anschließend erfolgt ein Aufsetzen des Platinenhalters 446 von außen auf den Garraum. Dabei erfolgt ein Einfädeln der Rastdome 112 durch die Aufnahmelöcher des Halters 446. Es folgt ein Durchziehen der hinterschnittigen Geometrie der Rastdome 112 mittels der zylindrischen Verlängerung der Rastdome 112 durch die Aufnahmelöcher des Platinenhalters 446. Es folgt ein Einsetzen der Platine 442 auf den unteren Rand der Stützgeometrie des Platinenhalters 446, ein Überkippen der Platine 442 bis diese hinter der Feder des Halters 446 einrastet. Der Einbau ist gemäß einem Ausführungsbeispiel nur in einer Richtung möglich, da die Verdrehung des Halters 446 durch die Prägung der als Garraumdecke ausgeführten Wand 222 verhindert wird. Gleiches gilt für die Montage der Platine 442, da die Geometrien des Halters 446 einen unsachgemäßen Einbau verhindern.

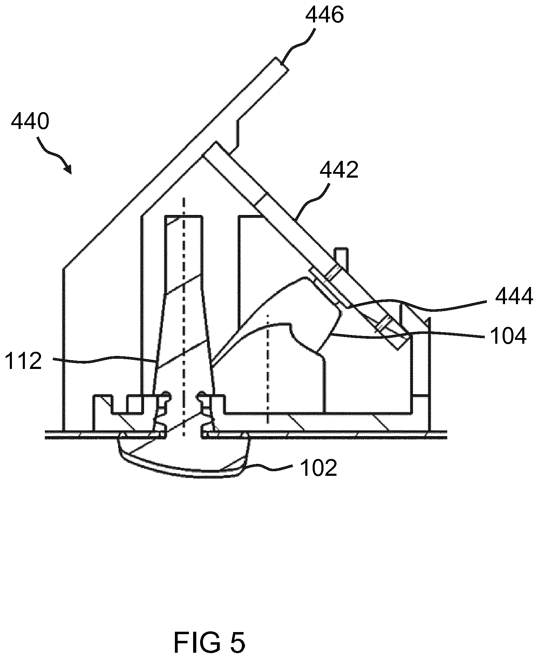

Die Figuren 5 und 6 zeigen eine Querschnittsdarstellung der anhand von Figur 4 beschriebenen Beleuchtungsvorrichtung 440 gemäß einem Ausführungsbeispiel. Der Platinenhalter 446 weist eine Rastnase auf, durch die die Platine 442 fixiert werden kann.

Die durch die Lichtleitvorrichtung gebildete Optik der Beleuchtungsvorrichtung 440 dient als Dichtung, und im Zusammenspiel mit dem Platinenhalter 446 als Rastpartner. Die Sicherung, Ausrichtung, Befestigung und Abdichtung des Garraumes gegenüber der auch als Beleuchtungseinheit bezeichneten Platine 442 und der Lichtleitvorrichtung wird durch die Verbindung von zwei Bauteilen, hier dem Platinenhalter 446 und den Rastdomen 112, realisiert. Das System kommt durch eine hinterschnittige Verbindung ohne Schrauben aus. Eine gute Kundendienstrate wird gemäß einem Ausführungsbeispiel durch die Platzierung des Leuchtmittels 444 in einem neutraleren Strahlungsbereich einer Mikrowelle des Gargeräts erreicht.

Vorteilhafterweise ist eine einfache Montage und Demontage möglich. Es wird zudem das Einsparen einer Dichtung oder zusätzlicher systembedingter Komponenten möglich. Zudem ergibt sich eine sichere Positionierung, eine hohe Toleranzunempfindlichkeit und für den Anwendungsfall eines Mikrowellengeräts wird der Einfluss der Milkrowellenstrahlung auf die Lebensdauer des Leuchmittels 444, beispielsweise einer LED, optimiert.

## Patentansprüche

1. Gargerät mit einem Garraum (220), einer Wand (222) des Garraums (220) und einer Lichtleitvorrichtung (100) zum Leiten von Licht in den Garraum (220) des Gargeräts, wobei die Lichtleitvorrichtung (100) die folgenden Merkmale aufweist:
- ein Lichtauskoppelelement (102) mit einer Anliegeseite zum fluiddichten Anliegen an einer Innenseite der Wand (222) des Garraums (220) und mit einer der Anliegeseite gegenüberliegenden Außenseite, wobei die Anliegeseite eine Grundfläche (106) umfasst; und
- ein sich von der Grundfläche (106) der Anliegeseite des Lichtauskoppelelements (102) aus erstreckendes stabförmiges Lichteinkoppelelement (104) mit einer außerhalb des Garraums (220) anordenbaren Einkoppelfläche (108) zum Einkoppeln von Licht, wobei das stabförmige Lichteinkoppelelement (104) zu dem Lichtauskoppelelement (102) und/oder der Wand (222) des Garraums (220) einen Winkel zwischen 10 Grad und 80 Grad ausgerichtet ist,
**dadurch gekennzeichnet, dass**
die Außenseite des Lichtauskoppelelements (102) eine gewölbte Auskoppelfläche (330) zum gerichteten Auskoppeln von Licht aus dem Lichtauskoppelelement (102) aufweist und
die Lichtleitvorrichtung (100) mit einem sich von der Grundfläche (106) der Anliegeseite des Lichtauskoppelelements (102) aus erstreckenden und durch eine Durchgangsöffnung der Wand (222) führbaren stabförmigen Rastdom (112), der eine Rasteinrichtung zum Verrasten des Rastdoms (112) an der Wand (222) des Garraums (220) aufweist,
wobei das Lichteinkoppelelement (104) und der zumindest eine Rastdom (112) zur Grundfläche (106) der Anliegeseite des Lichtauskoppelelements (102) unterschiedliche Winkel aufweisen und insbesondere deren Längsachsen in unterschiedlichen räumlichen Ebenen liegen.

2. Gargerät gemäß Anspruch 1, wobei die Lichtleitvorrichtung (100) in der Wand (222) des Garraumes (220) nah an einer Garraumöffnung positioniert ist, insbesondere das Lichteinkoppelelement zur Garraumöffnung hin geneigt ist.

3. Gargerät gemäß Anspruch 1 oder 2, bei dem der Rastdom (112) rechtwinklig zu der Grundfläche (106) ausgerichtet ist.

4. Gargerät gemäß einem der vorangegangenen Ansprüche, mit einem weiteren sich von der Grundfläche (106) aus erstreckenden und durch eine weitere Durchgangsöffnung der Wand (222) führbaren stabförmigen Rastdom (112) mit einer Rasteinrichtung (114) zum Verrasten des Rastdoms (112) an der Wand (222) des Garraums (220), wobei das Lichteinkoppelelement (104) zwischen dem Rastdom (112) und dem weiteren Rastdom (112) angeordnet ist.

5. Gargerät gemäß einem der vorangegangenen Ansprüche, bei dem das Lichtauskoppelelement (102) und/oder das Lichteinkoppelelement (104) schräg zu der Grundfläche (106), insbesondere in einem Winkel zwischen 10 und 80 Grad, ausgerichtet ist.

6. Gargerät gemäß einem der vorangegangenen Ansprüche, bei dem die Längsachsen von dem Lichteinkoppelelement (104) und des zumindest einen Rastdom (112) zur Grundfläche (106) in unterschiedlichen räumlichen Ebenen liegen.

7. Gargerät gemäß einem der vorangegangenen Ansprüche, bei dem die Anliegeseite des Lichtauskoppelelements (102) einen die Grundfläche (106) umschließenden und über die Grundfläche (106) hervorstehenden Dichtungsrand (110) aufweist.

8. Gargerät gemäß einem der vorangegangenen Ansprüche, die einstückig ausgeformt ist.

9. Gargerät gemäß einem der vorangegangenen Ansprüche, die aus Silikon ausgeformt ist.

10. Gargerät gemäß einem der vorangegangenen Ansprüche, mit einer Beleuchtungsvorrichtung (440) zum Beleuchten eines Garraums (220) eines Gargeräts, wobei die Beleuchtungsvorrichtung (440) die folgenden Merkmale aufweist:
- die Lichtleitvorrichtung (100);
- eine Platine (442) mit einem Leuchtmittel (448); und
- einen Platinenhalter (446) zum Halten der Platine (442) mit dem Leuchtmittel (448) gegenüberliegend zu der Einkoppelfläche (108) des Lichteinkoppelelements (104) der Lichtleitvorrichtung (100), wobei der Platinenhalter (446) eine Auflagefläche zum Auflegen des Platinenhalters auf eine Außenseite der Wand (222) des Garraums (220) aufweist.

11. Gargerät nach Anspruch 10, wobei der Platinenhalter (446) in seiner Auflagefläche wenigstens eine Durchgangsöffnung aufweist, durch die ein stabförmiger Rastdom (112) durchführbar ist, und wobei der Rastdom (112) mit seiner Rasteinrichtung zum Verrasten des Rastdoms an dem Platinenhalter (446) ausgeführt ist.

12. Gargerät gemäß einem der vorangegangenen Ansprüche, welches als Mikrowellengerät und/oder Dampfgargerät ausgeführt ist.

## Claims

1. Cooking appliance comprising a cooking chamber (220), a wall (222) of the cooking chamber (220) and a light guide device (100) for guiding light into the cooking chamber (220) of the cooking appliance, the light guide device (100) having the following features:
- a light decoupling element (102) comprising an abutment face for abutting an inner face of the wall (222) of the cooking chamber (220) in a fluid-tight manner and comprising an outer face opposite the abutment face, the abutment face comprising a base (106); and
- a rod-shaped light coupling element (104) which extends out from the base (106) of the abutment face of the light coupling element (102) and has a coupling surface (108) which can be arranged outside of the cooking chamber (220) in order to couple in light, the rod-shaped light coupling element (104) being oriented at an angle between 10 degrees and 80 degrees to the light decoupling element (102) and/or the wall (222) of the cooking chamber (220),
**characterised in that**
the outer face of the light decoupling element (102) has a curved decoupling surface (330) for directionally decoupling light from the light decoupling element (102) and the light guide device (100) with a rod-shaped latching dome (112) which extends out from the base (106) of the abutment face of the light decoupling element (102), can be guided through a through-opening of the wall (222) and has a latching device for latching the latching dome (112) to the wall (222) of the cooking chamber (220), the light coupling element (104) and the at least one latching dome (112) having different angles to the base (106) of the abutment face of the light decoupling element (102) and in particular the longitudinal axes of said light coupling element and latching dome being in different spatial planes.

2. Cooking appliance according to claim 1, wherein the light guide device (100) is positioned in the wall (222) of the cooking chamber (220) close to a cooking chamber opening, in particular the light coupling element is inclined towards the cooking chamber opening.

3. Cooking appliance according to either claim 1 or claim 2, wherein the latching dome (112) is oriented at right angles to the base (106).

4. Cooking appliance according to any of the preceding claims, comprising a further rod-shaped latching dome (112) which extends out from the base (106), can be guided through a further through-opening of the wall (222) and has a latching device (114) for latching the latching dome (112) to the wall (222) of the cooking chamber (220), wherein the light coupling element (104) is arranged between the latching dome (112) and the further latching dome (112).

5. Cooking appliance according to any of the preceding claims, wherein the light decoupling element (102) and/or the light coupling element (104) is oriented obliquely to the base (106), in particular at an angle between 10 and 80 degrees.

6. Cooking appliance according to any of the preceding claims, wherein the longitudinal axes of the light coupling element (104) and the at least one latching dome (112) are in different spatial planes to the base (106).

7. Cooking appliance according to any of the preceding claims, wherein the abutment face of the light decoupling element (102) has a sealing edge (110) which surrounds the base (106) and projects beyond the base (106).

8. Cooking appliance according to any of the preceding claims, which is formed in one piece.

9. Cooking appliance according to any of the preceding claims, which is formed from silicone.

10. Cooking appliance according to any of the preceding claims, comprising an illumination device (440) for illuminating a cooking chamber (220) of a cooking appliance, wherein the illumination device (440) has the following features:
- the light guide device (100);
- a circuit board (442) comprising a lighting means (448); and
- a circuit board holder (446) for holding the circuit board (442) comprising the lighting means (448) opposite the coupling surface (108) of the light coupling element (104) of the light guide device (100), wherein the circuit board holder (446) has a support surface for supporting the circuit board holder on an outer face of the wall (222) of the cooking chamber (220).

11. Cooking appliance according to claim 10, wherein the circuit board holder (446) has, in the support surface thereof, at least one through-opening through which a rod-shaped latching dome (112) can be guided, and wherein the latching dome (112) is designed, together with the latching device thereof, to latch the latching dome to the circuit board holder (446).

12. Cooking appliance according to any of the preceding claims, which is designed as a microwave appliance and/or steam cooking appliance.

## Revendications

1. Appareil de cuisson comprenant une chambre de cuisson (220), une paroi (222) de la chambre de cuisson (220) et un dispositif de guidage lumineux (100) destiné à guider la lumière dans la chambre de cuisson (220) de l'appareil de cuisson, le dispositif de guidage lumineux (100) présentant les caractéristiques suivantes :
- un élément d'extraction de lumière (102) ayant un côté d'appui pour une mise en butée étanche aux fluides sur un côté intérieur de la paroi (222) de la chambre de cuisson (220) et ayant un côté extérieur opposé au côté d'appui, le côté d'appui comprenant une surface de base (106) ; et
- un élément d'injection de lumière (104) en forme de tige s'étendant à partir de la surface de base (106) du côté d'appui de l'élément d'extraction de lumière (102) et comportant une surface d'injection (108) qui peut être disposée à l'extérieur de la chambre de cuisson (220) pour injecter la lumière, l'élément d'injection de lumière (104) en forme de tige étant orienté selon un angle compris entre 10 et 80 degrés par rapport à l'élément d'extraction de lumière (102) et/ou à la paroi (222) de la chambre de cuisson (220),
**caractérisé en ce que**
le coté extérieur de l'élément d'extraction de la lumière (102) comporte une surface d'extraction (330) incurvée pour l'extraction orientée de la lumière de l'élément d'extraction de la lumière (102), et le dispositif de guidage lumineux (100) comporte un dôme d'encliquetage (112) en forme de tige s'étendant à partir de la surface de base (106) du côté adjacent de l'élément d'extraction de la lumière (102) et pouvant être guidé à travers une ouverture de passage dans la paroi (222), lequel dôme d'encliquetage comporte un dispositif d'encliquetage pour l'encliquetage du dôme d'encliquetage (112) sur la paroi (222) de la chambre de cuisson (220), l'élément d'injection de lumière (104) et l'au moins un dôme d'encliquetage (112) présentant des angles différents par rapport à la surface de base (106) du côté d'appui de l'élément d'extraction de lumière (102), et en particulier leurs axes longitudinaux se trouvant dans des plans spatiaux différents.

2. Appareil de cuisson selon la revendication 1, dans lequel le dispositif de guidage lumineux (100) est positionné dans la paroi (222) de la chambre de cuisson (220) à proximité d'une ouverture de la chambre de cuisson, en particulier l'élément d'injection de lumière est incliné vers l'ouverture de la chambre de cuisson.

3. Appareil de cuisson selon la revendication 1 ou 2, dans lequel le dôme d'encliquetage (112) est orienté perpendiculairement par rapport à la surface de base (106).

4. Appareil de cuisson selon l'une des revendications précédentes, comprenant un autre dôme d'encliquetage (112) en forme de tige s'étendant à partir de la surface de base (106) et pouvant être guidé à travers une autre ouverture de passage de la paroi (222), comprenant un dispositif d'encliquetage (114) pour l'encliquetage du dôme d'encliquetage (112) sur la paroi (222) de la chambre de cuisson (220), l'élément d'injection de lumière (104) étant disposé entre le dôme d'encliquetage (112) et l'autre dôme d'encliquetage (112).

5. Appareil de cuisson selon l'une des revendications précédentes, dans lequel l'élément d'extraction de lumière (102) et/ou l'élément d'injection de lumière (104) est orienté de manière oblique par rapport à la surface de base (106), en particulier selon un angle compris entre 10 et 80 degrés.

6. Appareil de cuisson selon l'une des revendications précédentes, dans lequel les axes longitudinaux de l'élément d'injection de lumière (104) et de l'au moins un dôme d'encliquetage (112) par rapport à la surface de base (106) se trouvent dans des plans spatiaux différents.

7. Appareil de cuisson selon l'une des revendications précédentes, dans lequel le côté d'appui de l'élément d'extraction de la lumière (102) comporte un bord d'étanchéité (110) entourant la surface de base (106) et faisant saillie au-delà de la surface de base (106).

8. Appareil de cuisson selon l'une des revendications précédentes, lequel est réalisé en une seule pièce.

9. Appareil de cuisson selon l'une des revendications précédentes, lequel est réalisé en silicone.

10. Appareil de cuisson selon l'une des revendications précédentes, comprenant un dispositif d'éclairage (440) destiné à éclairer une chambre de cuisson (220) d'un appareil de cuisson, le dispositif d'éclairage (440) présentant les caractéristiques suivantes :
- le dispositif de guidage lumineux (100) ;
- une plaque (442) dotée d'un moyen d'éclairage (448) ; et
- un support de plaque (446) destiné à maintenir la plaque (442) comprenant le moyen d'éclairage (448) contre la surface d'entrée (108) de l'élément d'injection de lumière (104) du dispositif de guidage lumineux (100), le support de plaque (446) comportant une surface de support destiné à la mise en place du support de plaque sur un côté extérieur de la paroi (222) de la chambre de cuisson (220).

11. Appareil de cuisson selon la revendication 10, dans lequel le support de plaque (446) comporte, dans sa surface d'appui, au moins une ouverture de passage à travers laquelle un dôme d'encliquetage (112) en forme de tige peut être passé, et dans lequel le dôme d'encliquetage (112) doté de son dispositif de verrouillage est conçu pour l'encliquetage du dôme d'encliquetage sur le support de plaque (446).

12. Appareil de cuisson selon l'une des revendications précédentes, lequel est réalisé sous la forme d'un four à micro-ondes et/ou d'un appareil de cuisson à vapeur.
